# EUROPEAN PATENT SPECIFICATION

(11) **EP 1 484 900 B1**
(45) Date of publication and mention of the grant of the patent: **02.01.2008**
(21) Application number: 03425356.7
(22) Date of filing: 06.06.2003
(51) Int. Cl.: H04M 1/02, H05K 5/02

(54) **Housing assembly for portable electronic device**
Ein Gehäusezusammenbau für ein tragbares elektronisches Gerät
Un assemblage de boîtier pour un dispositif éelectronique portable

(43) Date of publication of application: 08.12.2004
(73) Proprietor: MOTOROLA, INC., Schaumburg, IL 60196 (US)
(72) Inventor: Becchio, Marco, 10041 Carignano (TO) (IT); Monelli, Paolo, 10098 Rivoli (TO) (IT)
(74) Representative: Cross, Rupert Edward Blount

(56) References cited:
- EP-A- 1 396 982
- WO-A-01/15331
- GB-A- 2 375 683
- US-A- 6 009 336
- US-B1- 2002 132 640

## Description

### Field of the invention

The present invention relates to a housing assembly for a portable electronic device, and to a portable electronic device having such a housing assembly.

### Background of the invention

A number of different form factors for portable electronic devices are currently known. In the mobile phone housing form factor art, for instance, the candy-bar form factor, the flip/claim form factor and rotating designs, such as the Motorola Tm V70 mobile telephone are known. In the personal digital assistant (PDA) art, in general a "book" style form factor has been used in which a large screen plus keyboard/user interface is contained on one side of the "book" and a simple cover is provided on the other side of the "book".

In general, electronic devices, in particular in the mobile phone art, have become smaller and/or more compact. This reduction in size has been achieved by advanced in integration technology, to make the size of the components smaller, together with the use of flip or rotating designs which enable the size of the device to be increased while in use, and then contracted while not in use.

The designs for the housings for prior art portable electronic devices have tended to be adapted to a voice communication function, or to a PDA function.

Recently it has become increasingly important for portable communication devices to provide functions in addition to merely communication functions or PDA functions. In particular, it is becoming increasingly important for portable electronic devices to provide gaming or other entertainment facilities. Different form factors are being proposed which are more adapted to the demands of providing gaming or other entertainment functions in portable communication devices.

UK patent application no. GB2,375,683 discloses a modular portable communication terminal having modules that can be detachably attached together and can rotate with respect to each other. The user can choose the functionality the terminal will need to have and then choose the modules accordingly. The chosen modules can be arranged in any order or configuration as desired by the user.

Document US-A-2002/132 640 discloses a portable telephone having a main housing in a first plane, and two rotational sub-housings in a second plane, parallel to the first plane.

The present invention seeks to provide a new form factor for a housing for a portable communication device. The new form factor is especially suitable for an electronic entertainment or gaming device: however, the invention is not limited to such a device and may be used for any portable electronic device.

### Summary of the invention

According to the invention there is provided a portable electronic device having a housing assembly as recited in claim 1 of the accompanying claims.

In one embodiment of the invention, at least one sub-housing has means for detachably coupling the sub-housing with the main housing or to another sub-housing. The relative order of coupling of the sub-housings may be selectable by the user. The at least one sub-housing may comprise a first part for detachably mounting the sub-housing to the main housing or to a sub-housing and a second part arranged to be relatively rotatable about the first part.

The or at least one sub-housing may receive power from the main housing.

Additionally or alternatively the sub-housings may communicate signals with main housing via Bluetooth Tm or other short-range communication technique.

Alternatively, a simple direct or sliding connection may be used to transfer power and/or signals.

### Brief description of the Invention

For a better understanding of the present invention, and to show how it may be brought into effect, reference will now be made, by way of example, to the accompanying drawings, in which:
Figures Ia and 1 b show a housing for a portable electronic device in a closed position;
Figures 2a and 2b show the housing for a portable electronic device shown in Figures Ia and 1 b in an open position;
Figure 3 shows a cross-sectional] view of the housing;
Figure 4 is a partial cross-sectional view of an exemplary housing of a portable electronic device in accordance with a first embodiment;
Figure 5 shows a plan view of a portion of the housing portion 100 of the exemplary housing shown in Figure 4;
Figure 6a shows a cross-section through the line XX of Figure 5; and
Figure 6b shows a cross-section through the fine YY of Figure 5.

### Brief description of Preferred Embodiments

The present invention is applicable to any portable electronic device, for example a mobile telephone, a wireless data device; a mobile radio, a PDA, a portable or laptop computer and similar such devices.

A first comparative example of a housing, not forming part of the invention, will now be described with reference to Figures Ia, I b, 2a, 2b and 3.

Figures Ia and I b show a housing 10 for a portable electronic device in a closed position.

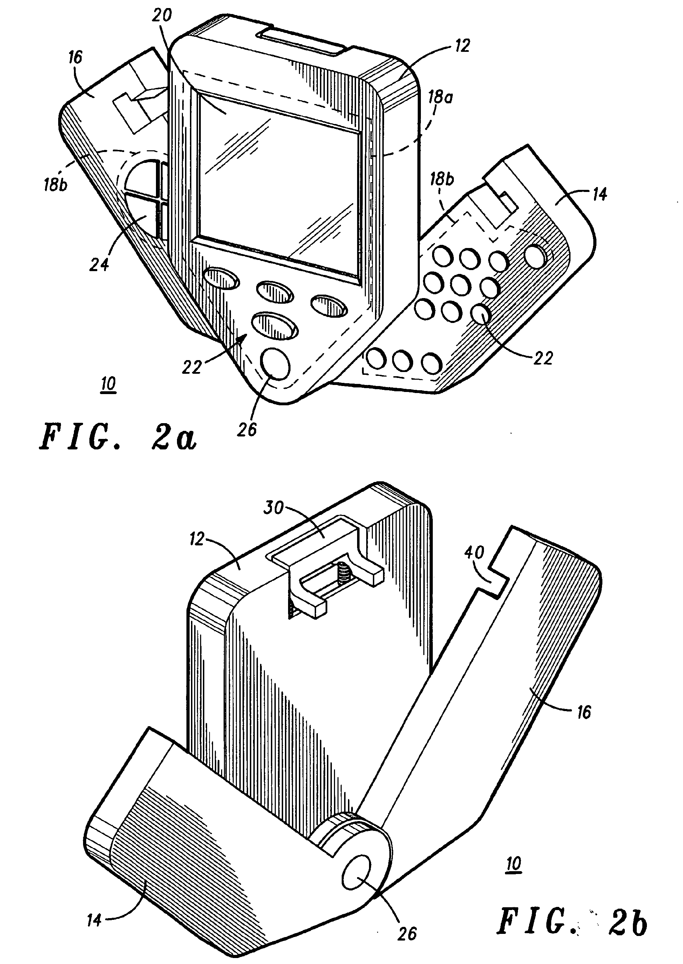

Figures 2a and 2b show the housing 10 for a portable electronic device shown in Figures Ia and 1 b in an open position.

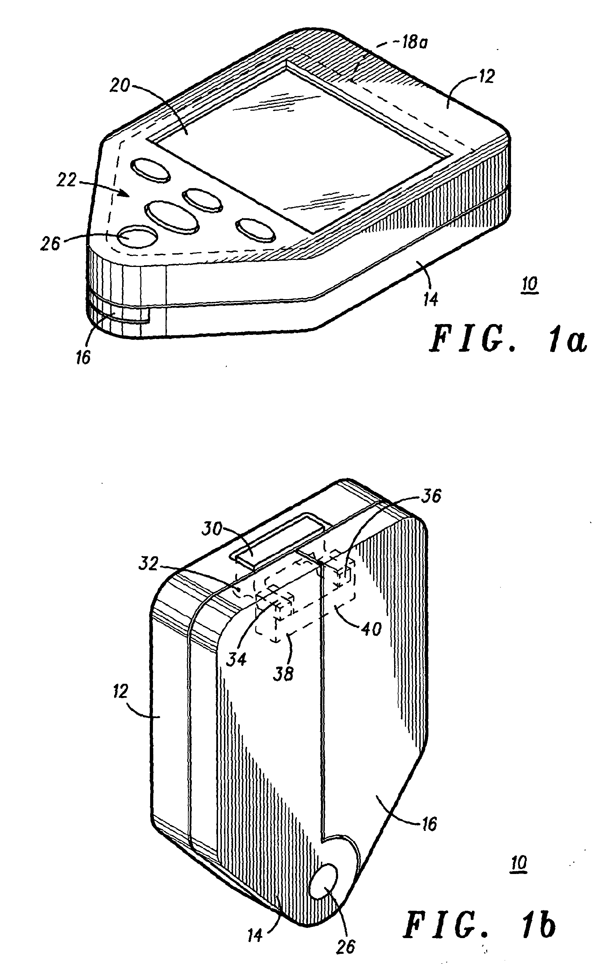

The housing 10 has a main housing, namely first housing portion 12, and two sub-housings, namely a second housing portion 14 and a third housing portion 16 (shown more clearly in Figure 1 b). The second and third housing portions 14 and 16 are shaped so that when fitted together in the closed position as shown in Figures la and 1 b, the 'footprint" of the first housing portion 12 is substantially congruent with the combined 'Footprint" of the second and third housing portions 14 and 16. This is achieved by the second and third housing portions 14 and 16 being symmetrical and substantially half the area of the first housing portion 12.

However, this is not necessary, and the first and second housing portions may be different shapes and or sizes: in addition, the second and third housing portions may each have substantially the same "footprint" as the first housing portion, the three housing portions being arranged one behind each other.

The electronic circuitry required for carrying out the functions of the electronic device may be housed primarily in the first housing portion 12, but may also be housed in either or both of the second and third housing portion 14, 16 if appropriate. Such circuitry may comprise: printed circuit boards; memory processor(s); antenna; etc to provide communications, PDA, entertainment or other function of the portable electronic device. Since the circuitry required to provide any given functionality of the portable electronic device wili be known to a skilled person, such circuitry will not be discussed herein in further detail.

In addition, the hardware required to provide an interface between the electronic device and the user of the electronic device (commonly referred to as the Man Machine Interface (MMI) 18) is provided on first, second and third housing portions 12, 14, 16. As shown in Figures la and 2a, the first housing portion 12 is provided with MMI elements 18a including a screen 20 (which may be a touch-sensitive screen, for example). In addition, in the illustrated embodiment, the first housing portion 12 is also provided with MMI elements 18a including some keyboard elements 22, for example a menu button. In addition, if the electronic device is a voice-capable communication device, for example, a microphone and speaker may also be provided on the first housing portion 12.

The second and third housing portions 14, 16 are also provided with MMI elements 18b, shown most clearly in Figure 2b. The MMI elements 18b comprise keyboard elements 22, together with a keypad 24. Other MMI elements 18 such as a joystick may also be included to provide a suitable MMI for the functionality of the housing portions.

The first, second and third housing portions are connected by means of a shaft 26 such that the second and third housing portions 14 and 16 are each rotatable relative to the first housing portion 12 about an axis A substantially perpendicular to the main plane of the first, second and third housing portions.

As shown most dearly in Figure Ia, the second and third housing portions 14, 16 are held in the closed position illustrated in Figures Ia and 1 b by means of a button 30. Button 30 is mounted on housing portion 12 and is rotatable about a button rotational axis 32. The button 30 is provided with two button pins 34, 36 which co-operate with retention grooves 38, 40 formed within housing portions 14 16 respectively. The button is retained in its latched or closed position (as illustrated in Figure 1 b) by spring 42 (not shown in Figure 1 b for clarity).

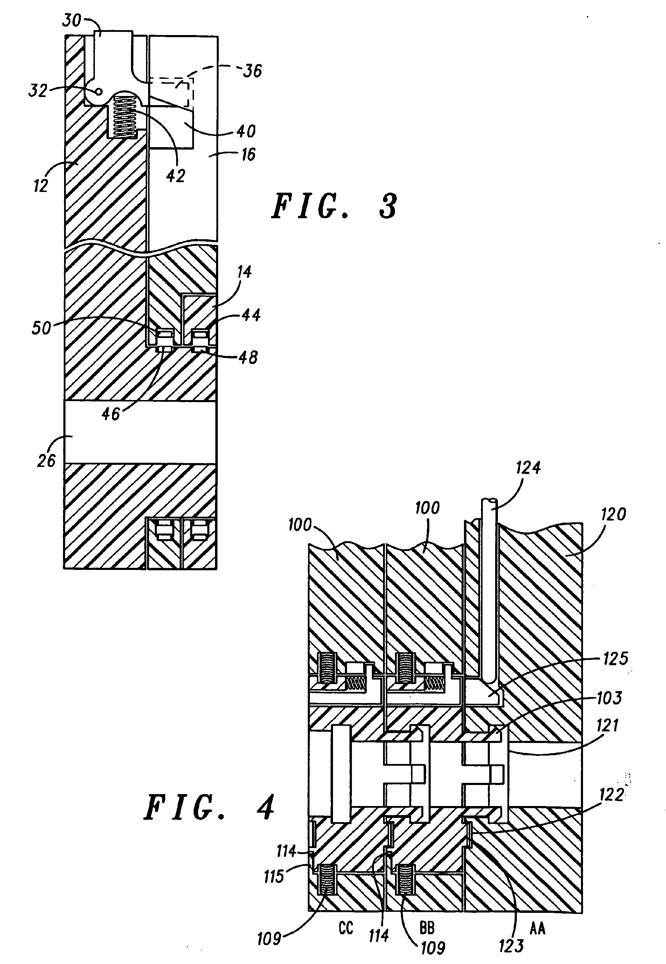

Figure 3 shows a cross-sectional view of the housing in accordance with the comparative example. The shaft 26 protrudes from the first housing portion 12 and the second and third housing portions 14, 16 are mounted thereto.

Each of the housing portions 14, 16 are provided with an arm groove 44, 46 respectively in which are disposed torsion springs 48, 50. As will be apparent to a skilled person, one end of each of the torsion springs 48, 50 is attached to the shaft 26 of the first housing portion 12 and the other end of the torsion springs 48, 50 is attached to housing portion 14, 16 respectively. The torsion springs are tensioned and arranged so as to exert a force on the second and third housing portions tending to move the second and third housing portions 14, 16 from the closed position, as shown in Figures la and I b to the open position, as shown in Figures 2a and 2b.

Additionally, the first, second and third housing portions will be provided with means to transfer power and preferably signals between the first housing portion and each of the second and the third housing portions. This may be achieved in a number of ways, as will be apparent to a skilled person. For example, the shaft 26 of the first housing portion 12 may be provided with a respective ring contact corresponding with a sliding contact provided on the second or the third housing portion 14, 16, to provide power from the first housing portion 12 to the second and third housing portions 14, 16. A similar technique may be used to transfer signals between the housing portions as appropriate, as will be apparent to a skilled person in addition, signals may be transferred, if necessary, by means of a Bluetooth Tm or other short-range wireless communication technique, as will be apparent to a skilled person.

During use of the electronic device having a housing in accordance with the comparative example the user may interact with the electronic device in a closed position, as shown in Figures 1 a and 1 b. Aiternatively, the user may wish to open or fan out the electronic device to the open position, as shown in Figures 2a and 2b.

In order to open the device, the user presses the button 30 to move the button against the resisting force provided by the button coil spring 42. In response, the button pivots about the button pivot axis 32 and the button pins 34, 36 move downwardly, in the illustrated arrangement, within the retention grooves 38 and 40. Once the button pins 34,36 reach the lower part of the respective retention grooves 38, 40, in the illustrated arrangement, the second and third housing portions 14, 16 are free to rotate to the open position as shown in Figures 2a and 2b in response to the rotational force exerted by the torsion springs 48, 50.

The second and third housing portions 14, 16 may be detachable from the first housing portion 12, and may be replaced by other housing portions, for example having different functionality. Thus a user may choose to leave a camera housing portion at home, but instead add housing portions facilitating playing of games on one occasion and on another occasion may choose to add the camera housing portion and leave the games housing portion at home. Thus, an extremely flexible form factor for an electronic device is provided, which facilitates the personalization and adaptability of the electronic device to the user's changing needs.

A first embodiment of the invention will now be described with reference to Figures 4-6.

Figure 4 is a partial cross-sectional view of a housing assembly comprising a first housing portion AA, a second housing portion BB, and a third housing portion CC. However, it will become apparent to a skilled person that the arrangement of the embodiment facilitates the use of any number of housing portions in the housing assembly.

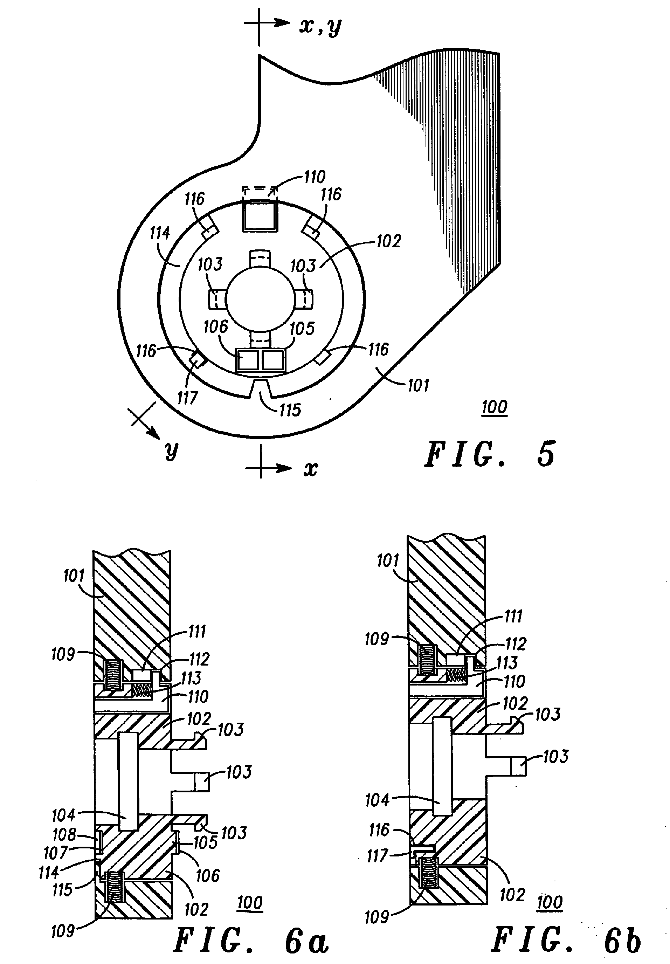

The first housing portion AA is the main housing portion and the second and third housing portions BB CC are sub-housing portions assembled thereto. The structure of the second and third housing portions are identical, and this structure will be explained in more detail with reference to the housing portion 100 shown in Figures 5, 6a and 6b. Figure 5 shows a plan view of a portion of the housing portion 1 00, Figure 6a shows a cross-section through the line XX of Figure 5, and Figure 6b shows a cross-section through the line YY of Figure 5.

The housing portion 100 has a first, rotating, portion 101 and a second, non-rotating portion 102. The first portion 101 and the second portion 102 are axially coupled together by means of pins or snap fastenings which will be known to a person skilled in the art, and have not therefore been shown explicitly.

The second non-rotating portion 102 is provided with snap portions 103 to attach each housing portion to the main housing portion AA or to another sub-housing portion BB or CC, and is also provided with a circular groove 104 (shown in Figures 6a and 6b) to receive the snap portions 103 from a neighboring housing portion. In this way, the housing portions can easily be attached and detached each other. In the illustrated arrangement, the snaps 103 may be detached from the circular groove 104 of a neighboring housing portion using moderate axial force: however, other ways of attaching and detaching the housing portions may be used, as will be apparent to a skilled person.

The second non-rotating portion 102 is also provided with a protrusion 105 hearing electrical contacts 106 together with a corresponding indentation 107 and electrical contacts 108 on the opposite side of the second non-rotating portion 102, as is seen most clearly in Figure 6a. In this way power may be supplied to the housing portions in the assembled position. If appropriate, signals may also be transferred between the housing portions in this manner.

A helical spring 109, shown most clearly in Figures 6a and 6b, is disposed between the first portion 101 of the housing portion 100 and the second portion 102 of the housing portion 100. The helical spring 109 is attached to both the first portion 101 and the second portion 102 and is arranged so as to exert a force such as to tend to rotate the first housing portion 101 with respect to the second housing potion 102, as will be apparent to a skilled person.

The housing portion 100 is also provided with a locking button 110 disposed in a groove 111 formed between the first housing portion 1 01 and the second housing portion 102. The groove 111 is provided with a locking indent 112 for receiving the locking button 110 in a locked position. In the locked position, as shown in Figures 6a and 6b, a spring 113 exerts a force on the locking button 1 10 to locate the locking button 110 in the locking indent 112. When the locking button 110 is moved against the force exerted by the spring 113, the locking button moves out of the locking indent 112 into the groove 111, where it is free to move.

To control the degree of rotation of the first portion 101 with respect to the second portion 102, the second portion 102 is provided with a circular slot 114 and the first portion 101 is provided with a corresponding tab 115 which rotates within the circular slot 114 as the first portion 101 rotates with respect to the second portion 102. The circular slot 114 is provided with holes 116 into one of which a pin 117 may be inserted. The pin 117 interferes with the rotation of the tab 115 of the first portion 101 within the circular slot 114, and so the position of the pin 117 effectively limits the rotation of the first portion 101 with respect to the second portion 102.

The housing assembly shown in Figure 4 comprises two housing portions 100 as sub-housings together with a main housing portion 120. In common with the housing portions 100, the main housing portion 120 is provided with a circular groove 121 to receive the snap portions 103 of the neighboring housing portion 100, and is also provided with an indentation 122 and electrical contacts 123 corresponding to protrusion 105 bearing electrical contacts 106 on the neighboring housing portion 100.

In addition, the main housing is provided with an opening mechanism comprising a unlocking pin 124 and a wedge-shaped block 125. The outer face 125a of the wedge-shaped block 125 abuts the outer face of the locking button 110. The inner angled face 125b of the wedge-shaped block 125 abuts the bottom of the unlocking pin 124. The top of the unlocking pin 124 is provided with an opening button (not shown). In the illustrated embodiment the unlocking pin 124 moves downwards in response to pressure on the button and the inner angled face 125b of the wedge-shaped block 125 transferred the downward movement of the unlocking pin 124 to a sideways movement of the wedge-shaped block 125. The sideways movement of the wedge-shaped block 125 is transferred to the locking buttons 110 of the housing portions 100 so that the locking buttons 110 move out of the locking indent 112 against the pressure exerted by the springs 113 until they reach a position in which they are free to move in the groove 111.

Thus for use of an electronic device having a housing in accordance with the embodiment illustrated with respect to Figures 4, 5, 6a and 6b, the user selects a number of sub-housings and the main housing. The sub-housings selected are the sub-housings required by the user in the near future: it being understood that in the illustrated embodiment different combinations of sub-housings may be selectable at different times.

The user selects the opening position for each of the selected sub-housings by inserting a pin 117 into an appropriate hole 116 in the circular slot 114 of each of the selected sub-housings 100. It is envisaged that the user will select a different opening position for each of the selected sub-housings, and it is preferable that the selected positions result in a fan-effect once the electronic device is opened such that the different sub housings are available in sequence. The different sub-housings may open on different sides of the main housing, or all on the same side.

Once the opening position has been selected, the user may assemble the housing assembly by fitting the snap portions 103 of the sub-housings 100 to the circular groove 104 of a sub-housing 100 or the circular groove 121 of the main housing 120.

In use, the user initially opens the electronic device by pressing on a button on the main housing (not shown). The unlocking pin 124 moves downwards in response to pressure on the button and the inner angled face 125b of the wedge-shaped block 125 translated the downward movement of the unlocking pin 124 to a sideways movement of the wedge-shaped block 125. The sideways movement of the wedge-shaped block 125 is transferred to the locking buttons 110 of the housing portions 100 so that the locking buttons 110 move out of the locking indent 112 against the pressure exerted by the springs 113 until they reach a position in which they are free to move in the groove 111. Once this position is reached, the first housing portion 101 of each of the sub-housings 100 begins to rotate relative to the respective second housing portion 102 in response to the force exerted by the respective helicoidal spring 109. As each of the first housing portions 101 rotates the respective tab 115 rotates in the respective circular slot 114 until the tab 115 reaches the respective pin 116. Thus the electronic device is opened.

Thus an extremely advantageous new form factor for a portable communication device is disclosed.

## Claims

1. A housing assembly (10) for a portable electronic device, the housing assembly (10) comprising a main housing (12, 120) in a first plane and at least two sub-housings (14, 16, 100), the at least two sub-housings (14, 16, 100) being substantially planar in a second plane, the first plane being substantially parallel to the second plane, the housing assembly being **characterised by** the main housing (12, 120) and the at least two sub-housings (14, 16, 100) being mounted together on a common axis substantially perpendicular to the first and second planes and wherein the at least two sub-housings (100) have means (114, 115, 117) for constraining the rotation of the sub-housings (100) about the common axis by respective different amounts relative to a closed position to reach a respective open position, the respective open position of the sub-housing being selectable by the user.

2. The housing assembly as claimed in claim 1, wherein at least one sub-housing (14, 16, 100) has means (103, 104) for detachably coupling the sub-housing (14, 16, 100) with the main housing (12, 120) or to another housing.

3. The housing assembly as claimed in claim 2, wherein the relative order of coupling of the sub-housings (14, 16, 100) is selectable by the user.

4. The housing assembly as claimed in one of claims 2 or 3 wherein at least one sub-housing (100) comprises a first part (102, 103, 104) for detachably mounting the sub-housing (100) to the main housing (120) or to another sub-housing (100) and a second part (101) arranged to be relatively rotatable about the first part (102, 103, 104).

5. The housing assembly as claimed in any preceding claim, wherein the means for constraining (114, 115, 117) for each sub-housing (100) comprises a slot, a tab (115) and a pin (117) inserted into the slot (114), wherein the tab (115) rotates within the slot (114) as the sub-housing rotates and the pin (117) is positioned to limit the rotation of the sub-housing (101) when it reaches a respective open position, wherein the position of the pin (117) in the slot (114) is selectable by the user such that the open position of the sub-housing (100) is selectable by the user.

6. The housing assembly as claimed in claim 5 wherein at least one sub-housing (14, 16 100) is independently rotatable.

7. The housing assembly as claimed in any preceding claim wherein the or at least one sub-housing (14, 16, 100) receives power from the main housing.

8. The housing assembly as claimed in any preceding claim wherein the sub-housings (14, 16, 100) communicate signals with main housing (12, 120) via a short-range communication technique.

9. A portable electronic device having a housing assembly as claimed in any preceding claim.

## Patentansprüche

1. Gehäuseanordnung (10) für eine tragbare elektronische Vorrichtung, wobei die Gehäuseanordnung (10) aus einem Hauptgehäuse (12, 120) in einer ersten Ebene und mindestens zwei Untergehäusen (14, 16, 100) besteht, wobei die mindestens zwei Untergehäuse (14, 16, 100) im Wesentlichen in einer zweiten Ebene planar sind, wobei die erste Ebene im Wesentlichen parallel zur zweiten Ebene ist, wobei die Gehäuseanordnung **dadurch gekennzeichnet ist, dass** das Hauptgehäuse (12, 120) und die mindestens zwei Untergehäuse (14, 16, 100) zusammen auf einer gemeinsamen Achse befestigt sind, die im Wesentlichen im rechten Winkel zur ersten und zweiten Ebene verläuft, und wobei die mindestens zwei Untergehäuse (100) Vorrichtungen (114, 115, 117) aufweisen, um die Drehbewegung der Untergehäuse (100) um die gemeinsame Achse herum um entsprechend unterschiedliche Beträge, relativ zu einer geschlossenen Position, zum Erreichen einer entsprechenden offenen Position einzuschränken, wobei die entsprechende offene Position des Untergehäuses von dem Benutzer ausgewählt werden kann.

2. Gehäuseanordnung nach Anspruch 1, **dadurch gekennzeichnet, dass** mindestens ein Untergehäuse (14, 16, 100) Vorrichtungen (103, 104) aufweist, um das Untergehäuse (14, 16, 100) mit dem Hauptgehäuse (12, 120) oder mit einem weiteren Gehäuse lösbar zu koppeln.

3. Gehäuseanordnung nach Anspruch 2, **dadurch gekennzeichnet, dass** die relative Reihenfolge des Koppelns der Untergehäuse (14, 16, 100) von dem Benutzer gewählt werden kann.

4. Gehäuseanordnung nach einem der Ansprüche 2 oder 3, **dadurch gekennzeichnet, dass** mindestens ein Untergehäuse (100) einen ersten Teil (102, 103, 104) aufweist, um das Untergehäuse (100) an dem Hauptgehäuse (120) oder an einem weiteren Untergehäuse (100) und einem zweiten Teil (101), der so angeordnet ist, dass er relativ um den ersten Teil (102, 103, 104) herum drehbar angeordnet werden kann, lösbar zu befestigen.

5. Gehäuseanordnung nach einem der vorhergehenden Ansprüche, **dadurch gekennzeichnet, dass** die Vorrichtung zum Einschränken (114, 115, 117) für jedes Untergehäuse (100) einen Schlitz, eine Nase (115) und einen Stift (117), der in den Schlitz (114) geschoben werden kann, aufweist, wobei sich die Nase (115) innerhalb des Schlitzes (114) dreht, wenn sich das Untergehäuse dreht, und der Stift (117) so angeordnet ist, dass er die Drehbewegung des Untergehäuses (101) begrenzt, wenn es eine entsprechende offene Position erreicht, wobei die Position des Stiftes (117) in dem Schlitz (114) von dem Benutzer so ausgewählt werden kann, dass die offene Position des Untergehäuses (100) von dem Benutzer ausgewählt werden kann.

6. Gehäuseanordnung nach Anspruch 5, **dadurch gekennzeichnet, dass** mindestens ein Untergehäuse (14, 16, 100) unabhängig drehbar ist.

7. Gehäuseanordnung nach einem der vorhergehenden Ansprüche, **dadurch gekennzeichnet, dass** das oder mindestens ein Untergehäuse (14, 16, 100) Strom von dem Hauptgehäuse empfängt.

8. Gehäuseanordnung nach einem der vorhergehenden Ansprüche, **dadurch gekennzeichnet, dass** die Untergehäuse (14, 16, 100) Signale über ein Kurzstreckenkommunikationsverfahren mit dem Hauptgehäuse (12, 120) austauschen.

9. Tragbare elektronische Vorrichtung mit einer Gehäuseanordnung nach einem der vorhergehenden Ansprüche.

## Revendications

1. Ensemble de boîtier (10) destiné à un dispositif électronique portable, l'ensemble de boîtier (10) comprenant un boîtier principal (12, 120) dans un premier plan et au moins deux sous-boîtiers (14, 16, 100), les au moins deux sous-boîtiers (14, 16, 100) étant sensiblement plans dans un second plan, le premier plan étant sensiblement parallèle au second plan, l'ensemble de boîtier étant **caractérisé par** le boîtier principal (12, 120) et les au moins deux sous-boîtiers (14, 16, 100) montés ensemble sur un axe commun sensiblement perpendiculaire aux premier et second plans et dans lequel les au moins deux sous-boîtiers (100) ont des moyens (114, 115, 117) pour contraindre la rotation des sous-boîtiers (100) autour de l'axe commun par des quantités différentes respectives par rapport à une position fermée pour atteindre une position ouverte respective, la position ouverte respective du sous-boîtier pouvant être choisie par l'utilisateur.

2. Ensemble de boîtier selon la revendication 1, dans lequel au moins un sous-boîtier (14, 16, 100) comprend des moyens pour coupler de manière détachable le sous-boîtier (14, 16, 100) avec le boîtier principal (12, 120) ou un autre boîtier.

3. Ensemble de boîtier selon la revendication 2, dans lequel l'ordre relatif de couplage des sous-boîtiers (14, 16, 100) peut être choisi par l'utilisateur.

4. Ensemble de boîtier selon l'une quelconque des revendications 2 ou 3, dans lequel au moins un sous-boîtier (100) comprend une première partie (102, 103, 104) pour monter de manière détachable le sous-boîtier (100) sur le boîtier principal (120) ou sur un autre sous-boîtier (100) et une seconde partie (101) agencée pour pouvoir tourner de manière relative autour de la première partie (102, 103, 104) .

5. Ensemble de boîtier selon l'une quelconque des revendications précédentes, dans lequel les moyens destinés à contraindre (114, 115, 117) pour chaque sous-boîtier (100) comprennent une fente, une patte (115) et une broche (117) insérée dans la fente (114), dans lequel la patte (115) tourne dans la fente (114) lorsque le sous-boîtier tourne et la broche (117) est positionnée pour limiter la rotation du sous-boîtier (101) lorsqu'il atteint une position ouverte respective, la position de la broche (117) dans la fente (114) pouvant être choisie par l'utilisateur de sorte que la position ouverte du sous-boîtier (100) peut être choisie par l'utilisateur.

6. Ensemble de boîtier selon la revendication 5, dans lequel au moins un sous-boîtier (14, 16, 100) peut tourner de manière indépendante.

7. Ensemble de boîtier selon l'une quelconque des revendications précédentes, dans lequel le ou au moins un sous-boîtier (14, 16, 100) reçoit une puissance depuis le boîtier principal.

8. Ensemble de boîtier selon l'une quelconque des revendications précédentes, dans lequel les sous-boîtiers (14, 16, 100) communiquent par signaux avec le boîtier principal (12, 120) via une technique de communication à courte portée.

9. Dispositif électronique portable ayant un ensemble de boîtier selon l'une quelconque des revendications.
